## Europäisches Patentamt

## European Patent Office

## Office européen des brevets

(11) Veröffentlichungsnummer: **0 321 700**
**A2**

(12) **EUROPÄISCHE PATENTANMELDUNG**

(21) Anmeldenummer: **88119168.8**

(22) Anmeldetag: **18.11.88**

(51) Int. Cl.⁴: **B60T 8/44** , **B60T 8/48**

(30) Priorität: **21.12.87 DE 3743346**

(43) Veröffentlichungstag der Anmeldung:
**28.06.89 Patentblatt 89/26**

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Stegmaier, Alwin**
**Breslauer Strasse 3**
**D-7141 Schwieberdingen(DE)**

(54) **Hydraulische Fahrzeugbremsanlage.**

(57) Die vorgeschlagene Fahrzeugbremsanlage hat Radbremsen (3, 4, 5, 6), einen Hauptbremszylinder, eine Hilfsdruckquelle (8) und einen aus dieser versorgten Bremskraftverstärker (10) zum Betätigen des Hauptbremszylinders (7) und eine Einrichtung (11), mittels der Radblockiergefahr verhinderbar als auch Antriebsschlupf an angetriebenen Rädern begrenzbar ist. Zum Zwecke des Verhinderns von Blockiergefahr sind zwischen dem Hauptbremszylinder (7) und den Radbremsen (3, 4, 5, 6) Ventile (43, 44, 45, 46) angeordnet, mittels denen die Radbremsen von dem Hauptbremszylinder (7) abkoppelbar und mit Druckmittelvorratsbehälter (22) zwecks Bremsdruckabsenkung verbindbar sind. Zum Ersetzen von in diesem Druckmittelvorratsbehälter (22) abgeflossenen Druckmittelmengen sind die Ventile (43, 44, 45, 46) an den Bremskraftverstärker (10) angeschlossen. Damit mit nur wenig technischem Aufwand für weitere Ventile das Begrenzen von Antriebsschlupf an angetriebenen Rädern möglich ist, sind zwischen den Radbremsen (5, 6) von angetriebenen Rädern und deren zugeordneten Ventilen (45, 46) als 2/2-Ventile ausgebildete Ventile (53, 54) angeschlossen, die des weiteren mit der Hilfsdruckquelle (8) verbunden sind. Dabei werden im Antriebsschlupfbegrenzungsfall die Ventile (45, 46) in Sperrstellung gesteuert, so daß zur Antriebsschlupfbegrenzung benötigter Bremsdruck nicht in den Hauptbremszylinder (7) entweichen kann.

FIG. 1

## Hydraulische Fahrzeugbremsanlage

Stand der Technik

Die Erfindung geht aus von einer hydraulischen Fahrzeugbremsanlage nach der Gattung des Hauptanspruchs.

Durch die GB-OS 2 168 771 ist eine Fahrzeugbremsanlage bekannt mit einem aus einer Hilfsdruckquelle versorgten Bremskraftverstärker, einem von diesem betätigbaren Hauptbremszylinder, Radbremsen und einer Einrichtung zum Verhindern von Radblockiergefahr beim Bremsen und zum Begrenzen von Antriebsschlupf. Diese Einrichtung besitzt eine erste Ventilanordnung mit Ventilen zum Sperren von Verbindungen zwischen dem Hauptbremszylinder und den Radbremsen und eine zweite Ventilanordnung, die aus mehreren Ventilen aufgebaut ist und zum Steuern des Bremskraftverstärkers im Blockierschutzfall und im Antriebsschlupfbegrenzungsfall dient. Nachteilig kompliziert und teuer ist der Aufbau der zweiten Ventilanordnung, so daß ein Einbau der dieserart ausgebildeten Fahrzeugbremsanlage in ansonsten preisgünstige Fahrzeuge spürbar verteuert. Eine gattungsgemäße durch die US-PS 4 589 706 bekannte Fahrzeugbremsanlage verzichtet im Blockierschutzfall und im Fall der Antriebsschlupfbegrenzung auf eine Steuerung des Bremskraftverstärkers mittels einer komplizierten Ventilanordnung. Deshalb sind zwischen erste sperrbare Ventile, die mit Bremsdruckanschlüssen des Hauptbremszylinders verbunden sind, und Radbremsen, zweite Ventile angeordnet, die als komplizierte und teuere Mehrstellungsventile ausgebildet sind und Verbindungen zwischen den zuerst genannten Ventilen und den Radbremsen sperren können und die Radbremsen mit einem Niederdruckvorratsbehälter der Hilfsdruckquelle verbinden können. Weitere Ventile sind an den Bremskraftverstärker und an die Hilfsdruckquelle angeschlossen und zwischen den ersten Ventilen und den zweiten Ventilen mit diesen zweiten Ventilen verbunden zum Ersetzen derjenigen Druckmittelmengen, die zur Verhinderung von Blockiergefahr aus Radbremsen zum Niederdruckvorratsbehälter der Hilfsdruckquelle abgeleitet wurden, aus dem Bremskraftverstärker, und zum Einleiten von Druckmittelmengen aus der Hilfsdruckquelle in Radbremsen von zum Durchdrehen neigenden Antriebsrädern zum Zweck des Aufzehrens überschüssiger Antriebsdrehmomente. Auch bei dieser Fahrzeugbremsanlage ist der technische Aufwand für die Ventile insgesamt nachteilig hoch.

Vorteile der Erfindung

Die Fahrzeugbremsanlage mit den kennzeichnenden Merkmalen des Hauptanspruchs hat den Vorteil, daß die Anordnung von Ventilen zur Verhinderung von Blockiergefahr einfacher ausgebildet ist, und daß die Anordnung von Ventilen zur Begrenzung von Antriebsschlupf nur noch wenig Mehraufwand gegenüber einer Fahrzeugbremsanlage, die nur mit einer Blockierschutzeinrichtung versehen ist, erfordert. Dadurch wird die erfindungsgemäße Fahrzeugbremsanlage insgesamt billiger. Dieser Vorteil entsteht, gleichgültig, ob zum Verhindern von Blockiergefahr eine Ventilanordnung zum Steuern des Bremskraftverstärkers oder eine Ventilanordnung gewählt wird, mittels der Druckmittelmengen aus den Radbremsen abgeleitet und durch Druckmittelmengen beispielsweise aus dem Bremskraftverstärker ersetzt werden können.

Durch die in den Unteransprüchen aufgeführten Maßnahmen sind vorteilhafte Weiterbildungen und Verbesserungen der im Hauptanspruch angegebenen hydraulischen Fahrzeugbremsanlage möglich. Durch die kennzeichnenden Merkmale des Anspruchs 2 ergibt sich ein montagefreundlicher Aufbau der Fahrzeugbremsanlage und demgemäß eine Kostenersparnis. Das Ausführungsbeispiel mit den kennzeichnenden Merkmalen des Anspruchs 3 hat den Vorteil, daß Rückschlagventile vermieden werden und durch Auswahl der Abmessungen der Schwimmkolbenanordnungen Bremsdrücke, die zum Aufzehren von überflüssigem Antriebsdrehmomenten bestimmt sind, so begrenzbar sind, daß eine nachteilige Erhitzung von Radbremsen der angetriebenen Räder auch auf langen vereisten Anstiegsstrecken vermieden wird. Des weiteren besteht bei Verwendung der Schwimmkolbenanordnungen die Möglichkeit, die Hilfsdruckquelle mit einem anderen Druckmittel zu betreiben als den Hauptbremszylinder. Das Ausführungsbeispiel mit den kennzeichnenden Merkmalen des Anspruchs 4 hat ebenfalls den Vorteil, daß die Hilfsdruckquelle mit einem anderen Druckmittel als der Hauptbremszylinder betreibbar ist. Durch Umgestaltung der Ventilanordnungen ist dabei lediglich eine Schwimmkolbenanordnung erforderlich.

Zeichnung

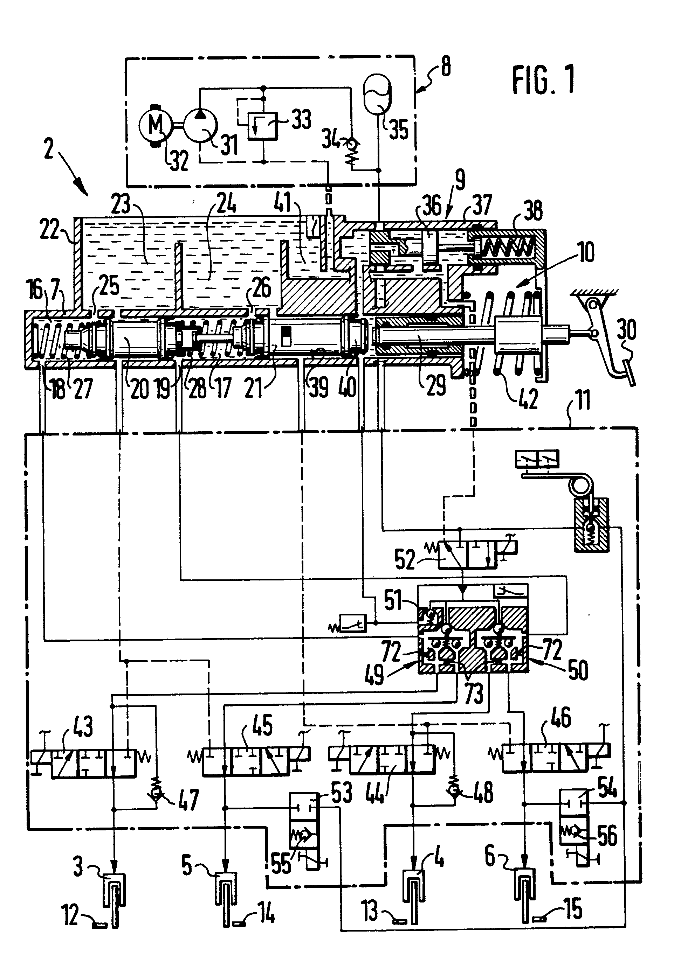

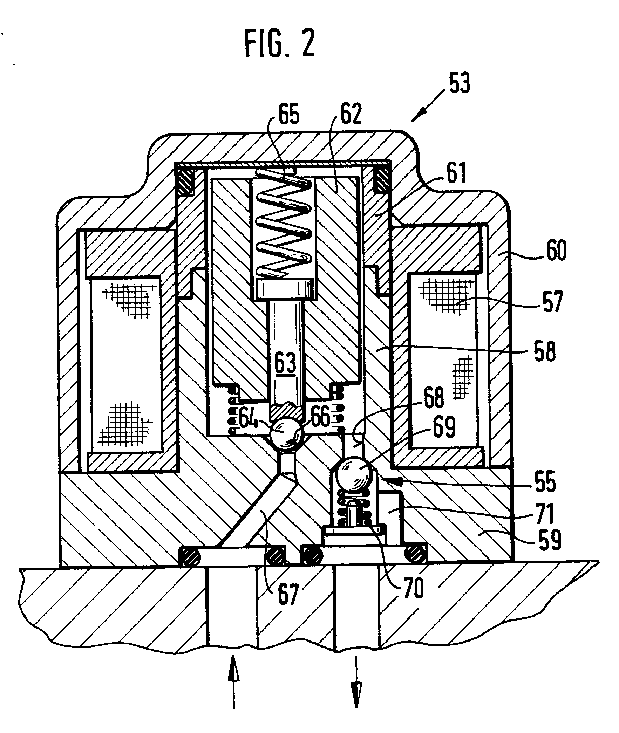

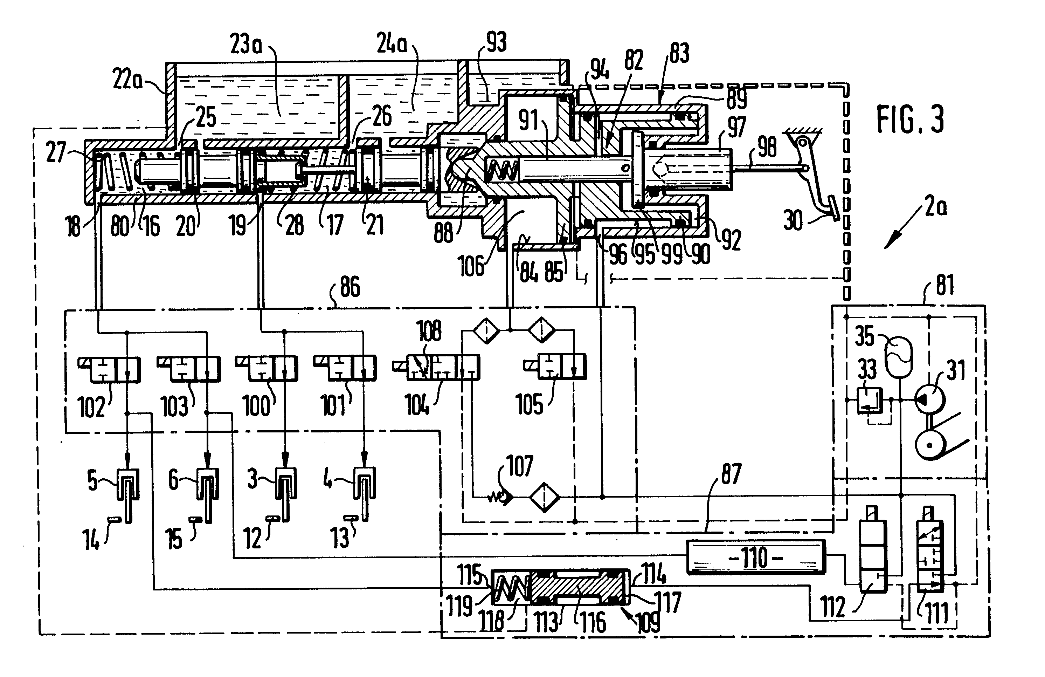

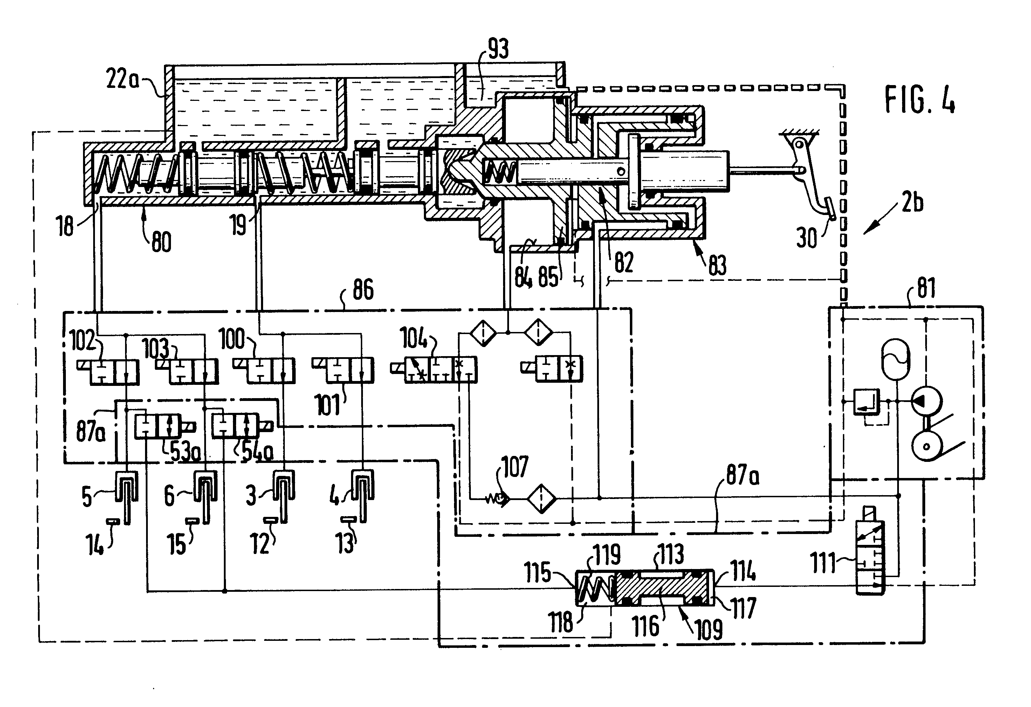

Drei Ausführungsbeispiele der erfindungsgemäßen hydraulischen Fahrzeugbremsanlage sind in der Zeichnung dargestellt und in der nachfolgenden Beschreibung näher erläutert. Es zeigen Figur 1 ein erstes Ausführungsbeispiel der erfindungsgemäßen Fahrzeugbremsanlage in schematisierter Darstellungsweise, Figur 2 eine Einzelheit des Ausführungsbeispiels gemäß der Figur 1, Figur 3 ein zweites Ausführungsbeispiel der erfindungsgemäßen Fahrzeugbremsanlage und Figur 4 ein drittes Ausführungsbeispiel der erfindungsgemäßen Fahrzeugbremsanlage.

Beschreibung der Ausführungsbeispiele

Die Fahrzeugsbremsanlage 2 gemäß der Figur 1 hat Radbremsen 3, 4 für nicht antreibbare Räder, Radbremsen 5, 6 für antreibbare Räder, einen zweikreisig ausgebildeten Hauptbremszylinder 7, eine Hilfsdruckquelle 8, einen mit einem Bremsventil 9 ausgerüsteten Bremskraftverstärker 10 und eine Einrichtung 11 zum Verhindern von Radblokkiergefahr und Begrenzen von Antriebsschlupf an antreibbaren Rädern.

Die Radbremsen 3 bis 6 können in beliebiger Weise als Scheibenbremsen oder als nicht dargestellte Trommelbremsen ausgebildet sein. Dabei ist es möglich, an Vorderradbremsen Scheibenbremsen und an Hinternrädern Trommelbremsen zu verwenden. Den Radbremsen 3 bis 6 sind Raddrehungssensoren 12 bis 15 zugeordnet. Diese Raddrehungssensoren können dem Stand der Technik entnommen werden und beispielsweise auf an den Bremsscheiben angeordnete Markierungen ausgerichtet sein. Diese Markierungen, die nicht dargestellt sind, können entsprechend der Ausbildung der Raddrehungssensoren beispielsweise aus Lükken und Zähnen bestehen, die an die Bremsscheiben oder Bremstrommeln angeformt sind. Die Raddrehungssensoren 12 bis 15 sind mit einem nicht dargestellten Steuergerät verbunden.

Der Hauptbremszylinder 7 hat zwei Zylinderräume 16, 17 und diesen zugeordnete Hauptbremszylinderanschlüsse 18 und 19, sowie einen ersten Hauptbremszylinderkolben 20 und einen zweiten Hauptbremszylinderkolben 21 und einen Druckmittelvorratsbehälter 22 mit zwei Becken 23 und 24. Bei in Ausgangsstellung befindlichen Radbremszylinderkolben 20 und 21 sind die Becken 23 und 24 über Schnüffelbohrungen 25 bzw. 26 mit den Zylinderräumen 16 bzw. 17 verbunden zum Zwecke des Füllens dieser Zylinderräume. Rückstellfedern 27 und 28 bewirken ein Verschieben der Hauptbremszylinderkolben 20 und 21 in die erwähnten Ausgangsstellungen. In der Verlängerung der Längsachse des Hauptbremszylinders 7 ist dem Hauptbremszylinderkolben 21 ein Notbremsstößel 29 zugeordnet, der im Falle des Versagens der Hilfsdruckquelle 8 mittels eines Bremspedals 30 gegen den Hauptbremszylinderkolben 21 bewegbar ist zum Zwecke von dessen Verschiebung in Richtung des Hauptbremszylinderkolbens 20. Durch die Verschiebung des Hauptbremszylinderkolbens 21 wird die ihm zugeordnete Schnüffelbohrung 26 überfahren, so daß in dem Zylinderraum 17 befindliches Druckmittel unter Druck gesetzt wird und dabei den Hauptbremszylinderkolben 20 verschiebt, so daß auch in dem Zylinderraum 16 enthaltenes Druckmittel unter Druck gerät.

Die Bremsdruckquelle enthält eine Pumpe 31, einen Pumpenantriebsmotor 32, ein Sicherheitsventil 33, ein Sicherheitsrückschlagventil 34 und einen Druckspeicher 35.

Das Bremsventil 9 hat einen beispielsweise aus dem Stand der Technik entnehmbaren Bremsventilschieber 36, der in einem Ventilgehäuse 37 unter Zwischenschaltung einer Wegsimulatorfeder 38 mittels des Bremspedals 30 verschiebbar ist. Das Ventilgehäuse 37 ist an die Hilfsdruckquelle 8 angeschlossen. Zum Bremskraftverstärker 10 gehört ein Zylinder 39 und ein Verstärkerkolben 40, der beispielsweise mit dem Hauptbremszylinderkolben 21 zu einem Bauteil integriert ist. Der Zylinder 39 ist hydraulisch mit dem Ventilgehäuse 37 verbunden. Das Ventilgehäuse 37 ist des weiteren mit einem Niederdruckvorratsbehälter 41 verbunden, der im Druckmittelvorratsbehälter 22 in Form eines Beckens untergebracht ist und aus dem sich die Druckquelle 8 versorgt. Je nach Stellung des Bremsventilschiebers 36 ist der Zylinder 39 zu diesem Niederdruckvorratsbehälter 41 druckentlastet oder über das Bremsventil 9 mit der Hilfsdruckquelle 8 verbunden zum Beaufschlagen des Verstärkerkolbens 40 zwecks Erzeugung von Bremsdrücken in den Zylinderräumen 16 und 17. Eine Rückstellfeder 42 sorgt dafür, daß das Bremspedal, der Bremsventilschieber 36 und der Notbremstößel 29 bei losgelassenem Bremspedal 30 in ihre Ausgangsstellungen zurückkehren.

Die Einrichtung 11 ist zwischen den Radbremsen 3 bis 6 und dem Hauptbremszylinder und dem Verstärker 10 angeordnet. Die Einrichtung 11 enthält den Radbremsen 3 bis 6 einzeln zugeordnete elektromagnetisch steuerbare 3/3-Ventile 43, 44, 45, 46, den Radbremsen 3 und 4 einzeln zugeordnete Einwegventile 47, 48 als Schnelldruckentlastungsventile, mit den Radbremszylinderanschlüssen 18 und 19 verbundene gleich ausgebildete Gradientenumschaltventile 49 und 50, ein an den Zylinder 39 angeschlossenes Bremsdruckeinspeiseventil 51 für den Blockierschutzbetrieb, ein elektromagnetisch betätigbares Vorsteuerventil 52 und zwei zur Antriebsschlupfbegrenzung den Radbremsen 5, 6 von antreibbaren Rädern zugeordnete Ventile 53 und 54. Diese Ventile sind mit den Radbremsen 5 und 6 ständig verbunden und außerdem an die Hilfsdruckquelle 8 angeschlossen. Die Ventile 53 und 54 sind als 2/2-Ventile ausgebildet und haben Grundstellungen, die Sperrstellungen entsprechen. Die Ventile 53 und 54 sind mit Einwegventilen 55 und 56 in Reihenschaltung kombiniert und zu einer Montageeinheit zusammengefaßt. Diese Montageeinheit ist in der Figur 2 dargestellt. Die Einwegventile 55, 56 entkoppeln die Radbremsen 5, 6 im Fall der Antriebsschlupfbegrenzung.

Wie in der Figur 2 dargestellt, gehören zu einem Ventil 53 eine Erregerspule 57, ein Polrohr 58 mit einem angeformten Jochteil 59, ein im wesentlichen topfförmiges zweites Jochteil 60, ein nicht magnetisierbares Rohr 61 zwischen dem Polrohr 58 und dem Jochteil 60, ein Anker 62, eine Ventilstange 63 mit einem Ventilkopf 64, eine Schließfeder 65 und ein Ventilsitz 66, gegen den der Ventilkopf 64 mittels der an der Ventilstange 63 angreifenden Schließfeder 65 gedrückt wird. Der Ventilsitz 66 ist über einen Kanal 67, der durch das Jochteil 59 hindurchführt, anschließbar. Der Ventilsitz 66 öffnet sich bei abgehobenem Ventilkopf 64 in das Polrohr 58. Von dort aus führt ein weiterer Kanal 68 zu dem Eingwegventil 55, das in das Jochteil 59 eingebaut ist und beispielsweise eine Ventilkugel 69 und eine Schließfeder 70 enthält. Das Einwegventil 55 ist über einen Kanal 71 mit der zugeordneten Radbremse 5 verbunden. Das Eingwegventil 54 ist in gleicher Weise aufgebaut und sinngemäß über sein Einwegventil 56 mit der Radbremse 6 verbunden.

Das Bremsdruckgradientenumschaltventil 49 verbindet in seiner Grundstellung den Hauptbremszylinderanschluß 18 ungedrosselt mit den 3/3-Ventilen 43 und 45. Dieser Grundstellung ist die Schließstellung des Bremsdruckeinspeiseventils 51 zugeordnet. In der Schaltstellung unterbricht das Bremsdruckgradientenumschaltventil die ungedrosselten Verbindungen, so daß der Bremszylinderanschluß 18 nunmehr über Drosseln 72 und 73 mit den 3/3-Ventilen 43 und 45 verbunden ist. Dieser Schaltstellung zugeordnet ist die Öffnungsstellung des Bremsdruckeinspeiseventils 51. In den Schaltstellungen der beiden Ventile 49 und 51 ist auch der Zylinder 39 und damit auch das Bremsventil 9 über die Drosseln 72 und 73 mit den 3/3-Ventilen 43 und 45 verbunden. Das Vorsteuerventil 52 dient zum Umschalten der Ventile 49, 50 und 51 in ihre Schaltstellungen. Hierfür ist ein nicht dargestellter Schaltkolben vorgesehen, der beispielsweise aus der US-PS 4 575 160 entnehmbar ist. Weil das Bremsdruckgradientenumschaltventil 50 genauso ausgebildet ist wie das Ventil 49 und auch gleichzeitig mit diesem in seine Schaltstellung steuerbar ist, erübrigt sich eine besondere Beschreibung. Es wird deshalb lediglich darauf hingewiesen, daß dieses Bremsdruckgradientenumschaltventil 50 gedrosselte oder ungedrosselte Verbindungen zwischen dem Hauptbremszylinderanschluß 19, dem Bremsventil 9 und den 3/3-Ventilen 44 und 46 bewirkt. Beide Bremsdruckgradientenumschaltventile 49 und 50 sind beispielsweise nach Art des in der US-PS 4 575 160 beschriebenen Ventils als Kugelventile ausgebildet. Die Energie zum Steuern der Ventile 49, 50 und 51 wird dem Vorsteuerventil 52 aus der Hilfsdruckquelle 8 zugeführt.

Die Fahrzeugbremsanlage 2 ist im nicht benutzten Zustand dargestellt, das heißt, daß das Bremspedal 30 nicht betätigt ist und daß an antreibbaren Rädern ein unerwünscht hoher Antriebsschlupf auftreten könnte.

Die Fahrzeugbremsanlage 2 funktioniert in der nachfolgend beschriebenen Weise.

Zunächst wird angenommen, daß aus irgendwelchen Gründen der Pumpenantriebsmotor 32 nicht einschaltbar ist und demzufolge der Druckspeicher 35 keine nutzbare Druckenergie enthält. Dann wird bei einer Betätigung des Bremspedals 30 über den Notbremsstößel 29 der Verstärkerkolben 40 und der mit ihm verbundene Hauptbremszylinderkolben 21 lediglich mittels der Kraft des Fahrers zum Zwecke von Bremsdruckerzeugung verschoben. Wie bereits angedeutet, entstehen die Bremsdrücke in den Zylinderräumen 16 und 17 und gelangen durch deren Hauptbremszylinderanschlüsse 18 und 19 und durch die Bremsdruckgradientenumschaltventile 49 und 50 zu den 3/3-Ventilen 43, 44, 45 und 46 und durch diese 3/3-Ventile hindurch in die jeweilige Radbremse 3, 4, 5 bzw. 6. Weil lediglich mittels Fußkraft gebremst wird, wird auf einigermaßen griffigen Straßen keine Gefahr bestehen, daß an den mit den Radbremsen 3, 4, 5 und 6 verbundenen Rädern Blockiergefahr auftritt. Wird das Bremspedal 30 losgelassen, so sinken die Bremsdrücke in den Zylinderräumen 16 und 17 und die Radbremsen werden gelöst. Bei schnellem Loslassen des Bremspedals besteht für in den Radbremsen 3 und 4 enthaltenem Bremsdruckmittel die Möglichkeit, zum großen Teil durch die Einwegventile 47 und 48 zum Hauptbremszylinder 7 zu entweichen, so daß eine unvermeidliche Drosselwirkung der 3/3-Ventile 43 und 44 beim Lösen der Radbremsen 3 und 4 nicht hindert.

Bei in Ordnung befindlicher Fahrzeugbremsanlage 2 treibt der Pumpenantriebsmotor 32 die Pumpe 31 an, die den Druckspeicher 35 ausreichend mit Druck versorgt. Befindet sich ein mit geladenem Druckspeicher 35 befindliches Fahrzeug in Fahrt, so werden entsprechend den sich drehenden Rädern des Fahrzeugs von den Raddrehungssensoren 12 bis 15 Raddrehungssignale abgegeben, die von dem bereits erwähnten, jedoch nicht dargestellten Steuergerät überwacht werden. Wird das Fahrzeug auf beispielsweise wenig griffiger Straße durch Betätigung des Bremspedals gebremst, so bewirkt das Niedertreten des Bremspedals 30 über die Wegsimulatorfeder 38 eine Verschiebung des Bremsventilschiebers 36. Dieser trennt dadurch den Zylinder 39 von dem Niederdruckvorratsbehälter 41 und verbindet den Zylinder 39 so lange mit der Hilfsdruckquelle 8, bis ein dadurch gegenüberliegend zur Wegsimulatorfeder 38 ansteigender Druck den Bremsventilschieber gegen die Wegsimulatorfeder 38 belastet und diese dadurch zusammendrückt. Da die Zusammendrückung der Wegsimulatorfeder 38 andererseits aber auch Entgegenhalten des Bremspedals 30 vom Fahrer her erfordert, ist der in dem Zylinder 39 am Verstärkerkolben 40 wirksam werdende Druck abhängig von der Stellung des Bremspedals 30.

Der auf dem Verstärkerkolben 40 lastende Druck verschiebt den Verstärkerkolben und den Hauptbremszylinderkolben 21, so daß in bereits beschriebener Weise in den Zylinderräumen 16 und 17 Bremsdrücke zustandekommen, die in bereits beschriebener Weise in die Radbremsen 3, 4, 5 und 6 gelangen.

Wird durch zunehmend kräftigere Betätigung des Bremspedals beispielsweise von der Radbremse 3 eine Bremskraft erzeugt, die ein mit ihr gekoppeltes Rad in Blockiergefahr bringt, so wird dieses Rad schneller seine Drehzahl verlieren als andere Räder, die keiner Blockiergefahr unterliegen. Demzufolge werden von dem zugeordneten Raddrehungssensor 12 abgegebene Raddrehwinkelsignale in zunehmend länger werdenden Zeitabständen an das Steuergerät gelangen, das durch Vergleich mit Raddrehungssignalen aus den anderen Raddrehungssensoren 13, 14 und 15 die Blockiergefahr erkennt. Bei Erkennen der Blockiergefahr steuert das Steuergerät das 3/3-Ventil 43 in die zweite Steuerstellung, die sogenannte Bremsdruckabsenkstellung.

Hierbei verbindet das 3/3-Ventil 43 die Radbremse über nicht bezeichnete Leitungen mit dem Druckmittelvorratsbehälter 22, so daß die Bremskraft absinkt und die Drehung des Rades infolge Kontaktes mit der Fahrbahn beschleunigt wird. Ist nun eine ausreichende Raddrehungsbeschleunigung erfolgt, so gelangen in kürzer gewordenen Zeitabständen Raddrehungsimpulse aus dem Raddrehungssensor an das Steuergerät, und das Steuergerät erkennt daran, daß die Blockiergefahr beendet ist. Infolgedessen steuert das Steuergerät das 3/3-Ventil 43 in seine Grundstellung zurück, so daß nun eine Verbindung zu dem Bremsdruckgradientenumschaltventil 49 wieder hergestellt wird. Um nun durch die Wiederherstellung dieser Verbindung eine teilweise Entleerung des Zylinderraums 16 infolge Druckgefälles zwischen diesem und der Radbremse 3 zu verhindern, schaltet das Steuergerät über das Vorsteuerventil 52 das Bremsdruckeinspeiseventil 51 in seine Einspeisestellung und öffnet dabei gleichzeitig das Bremsdruckgradientenumschaltventil 49 zum Bremsdruckeinspeiseventil 51. Dadurch wird Druckmittel aus dem Bremsventil 9 auf dem Umweg über den Zylinder 39 und das 3/3-Ventil 43 der Radbremse 3 zugeführt. Das Umschalten des Bremsdruckgradientenumschaltventils bewirkt, wie bereits erwähnt, daß nun in der Verbindung zu der Radbremse 3 die Drossel 72 liegt. Die Drossel 72 bewirkt, daß ein Bremsdruckanstieg in der Radbremse 3 allmählich erfolgt zur Vermeidung einer sofortigen Überbremsung des zugeordneten Rades. Ist nun in beabsichtigter Weise der Bremsdruck allmählich angestiegen, so kann weitere Blockiergefahr beginnen, und das Steuergerät erkennt dies und kann beispielsweise einen nachteiligen weiteren Bremsdruckanstieg dadurch verhindern, daß es das 3/3-Ventil 43 in seine erste Schaltstellung steuert, in der dieses Ventil 43 einen weiteren Strom von Druckmittel zu der Radbremse 3 und damit einen weiteren Druckanstieg verhindert.

In gleicher Weise werden die 3/3-Ventile 44, 45 und 46 betätigt, wenn die ihnen zugeordneten Radbremsen 4, 5 und 6 Radblockiergefahr verursachen. Tritt während einer vorwählbaren Zeitspanne keine Rad blockiergefahr mehr auf, dann läßt das Steuergerät das Vorsteuerventil 52 in seine Ausgangsstellung zurückkehren, und infolgedessen nehmen auch die Ventile 49, 50 und 51 ihre Grundstellungen ein. Danach verursachen die Bremsdruckgradientenumschaltventile 49 und 50 keine Drosselung mehr, und die nächstfolgende Bremsung ist wiederum mittels des Bremspedals steuerbar.

Wird das Fahrzeug angetrieben, so entsteht an den angetriebenen Rädern, denen die Radbremsen 5 und 6 zugeordnet sind, mehr oder weniger großer Antriebsschlupf. Dieser Antriebsschlupf vermindert die Fähigkeit der Räder, seitliche Führungskräfte auf das Fahrzeug auszuüben. Aus diesem Grund soll die Größe des Antriebsschlupfs so begrenzt werden, daß ausreichend Seitenführungskräfte dem Fahrzeug zur Verfügung stehen, denn sonst kann beispielsweise das Fahrzeug nicht sicher in einer Kurve bewegt werden und auch nicht am Abrutschen von schräg geneigten Fahrbahnen gehindert werden. Das Steuergerät überwacht wiederum Drehwinkelanzeigen aus den Raddrehungssensoren 12 bis 15 und erkennt, ob angetriebene Räder eine kritische Antriebsschlupfgröße erreichen. Tritt beispielsweise an dem der Radbremse 5 zugeordneten Rad Antriebsschlupf mit unerwünschter Größe auf, so steuert das Steuergerät das Ventil 53 aus seiner Grundstellung in die Durchlaßstellung und gleichzeitig das 3/3-Ventil 45 in seine erste Steuerstellung, in der dieses eine Verbindung zwischen der Radbremse 5 und dem Hauptbremszylinder 7 unterbricht. Dies hat zur Folge, daß durch das geöffnete Ventil 53 hindurch Druckmittel aus der Hilfsdruckquelle 8 zu der Radbremse 5 gelangt und dort einen Bremsdruck erzeugt, der überschüssiges Antriebsdrehmoment aufzehrt. Infolgedessen wird die Radbremse 5 das ihr zugeordnete Antriebsrad verlangsamen. Die Größe der Verlangsamung wird vom Steuergerät über der Raddrehungssensor 14 erkannt. Ist die Verlangsamung in ausreichendem Maß aufgetreten, so steuert das Steuergerät das Ventil 53 zurück in seine Grundstellung, so daß in der Radbremse 5 kein weiterer Bremsdruckanstieg mehr möglich ist. Sinkt nun beispielsweise durch Vermindern des auf das Rad wirkenden Antriebsmoments die Größe des Antriebsschlupfes unter eine vorgewählte Grenze, so läßt das Steuergerät das 3/3-Ventil 45 in seine Grundstellung zurückkehren, wodurch Druckmittel aus der Radbremse 5 durch das 3/3-Ventil 45, das Bremsdruckgradientenumschaltventil 49 und durch den Zylinderraum 16 und die Schnüffelbohrung 25 hindurch in den Druckmittelvorratsbehälter 22 entweicht. Der beschriebene Vorgang ist typisch, wenn beispielsweise ein dem angesprochenen Rad zugeordneter Streifen der Fahrbahn naß oder vereist ist.

Tritt unerwünschter Antriebsschlupf an beiden angetriebenen Rädern auf, so werden sinngemäß beide 3/3-Ventile 45 und 46 in Sperrstellungen gesteuert und beide Ventile 53 und 54 geöffnet.

Man kann auch die Ventile 45, 46 und 53, 54 dazu benützen, eine übliche von Hand betätigbare Feststellbremse vorübergehend zu ersetzen, wenn das Fahrzeug bei einem kurzen Zwischenhalt beispielsweise auf einer Steigungsstrecke im Stillstand gehalten werden soll.

Durch die Anordnung von zwei Ventilen 53 und 54 für eine Achse wirkt die Bremsanlage ähnlich einer Differentialsperre. Die Bremsanlage kann sinngemäß mit weiteren Ventilen ausgerüstet werden, wenn zusätzlich zu den beiden beschriebenen Antriebsrädern weitere Räder antreibbar sind und der Antrieb dieser Räder über wenigstens ein Differentialgetriebe erfolgt.

Das Ausführungsbeispiel einer Fahrzeugbremsanlage 2a gemäß der Figur 3 hat ebenfalls wieder Radbremsen 3, 4, 5 und 6, von denen die Radbremsen 5 und 6 angetriebenen Fahrzeugrädern zugeordnet sind, den Radbremsen 3 bis 6 zugeordnete Raddrehungssensoren 12 bis 15, und des weiteren einen Hauptbremszylinder 80, eine Hilfsdruckquelle 81, ein Bremsventil 82, einen Bremskraftverstärker 83, einen Hilfszylinder 84 mit einem Hilfskolben 85, die zu einer Einrichtung 86 zum Verhindern von Blockiergefahr gehören, und eine Einrichtung 87 zum Begrenzen von Antriebsschlupf.

Der Hauptbremszylinder 80 hat analog zum Hauptbremszylinder 7 des ersten Ausführungsbeispiels Zylinderräume 16, 17, Hauptbremszylinderanschlüsse 18, 19, Hauptbremszylinderkolben 20, 21, einen Druckmittelvorratsbehälter 22a mit Becken 23a, 24a, Schnüffelbohrungen 25, 26 und Rückstellfedern 27, 28.

In Richtung zum Bremskraftverstärker 83 schließt sich in achsgleicher Ausrichtung zu dem Hauptbremszylinder 80 der Hilfszylinder 84 an. Dieser nimmt den Hilfskolben 85 längsverschiebbar auf. Der Hilfskolben 85 hat einen stößelartigen Ansatz 88, der gegen den Hauptbremszylinderkolben 21 gerichtet ist. Der Bremskraftverstärker 83 hat einen Verstärkerzylinder 89, der gleichachsig zum Hilfszylinder 84 ausgerichtet ist, und einen Verstärkerkolben 90, der sich an den Hilfskolben 85 anschließt. Das Bremsventil 82 ist in den Hilfskolben 85 und den Verstärkerkolben 90 integriert, so daß diese beiden Kolben 85 und 90 ein Bremsventilgehäuse bilden. In diesem ist ein Bremsventilschieber 91 verschiebbar, mittels dem in der Bremsventilschiebergrundstellung ein von dem Verstärkerzylinder 89 und dem Verstärkerkolben 90 umgrenzter Verstärkerraum 92 mit einem Niederdruckvorratsbehälter 93 beispielsweise über nicht bezeichnete Leitungen oder Kanäle verbunden ist. Durch relative Verschiebung des Bremsventilschiebers 91 in den Kolben 85 und 90 ist der Verstärkerraum 92 auch mit der Hilfsdruckquelle 81 verbindbar. Hierzu besitzt der Verstärkerkolben 90 eine Zulaufbohrung 94, die in eine am Verstärkerkolben 90 befindliche Umfangsnut 95 mündet. In Ausrichtung zur Umfangsnut 95 ist am Verstärkerzylinder 89 ein Versorgungsanschluß 96 vorgesehen, der über nicht bezeichnete Leitungen und Kanäle von der Hilfsdruckquelle 81 mit unter Druck gesetztem Druckmittel versorgt wird. Der Bremsventilschieber 91 ist über einen relativ zum Verstärkerzylinder 89 abgedichtet verschiebbaren Fühlkolben 97 und eine Pedalstange 98 mittels eines Bremspedals 30 verschiebbar. Mit dem Fühlkolben 97 ist innerhalb des Verstärkerraumes 92 ein kreisförmig umgrenztes Druckstück 99 verbunden. Der Fühlkolben 97 und das Druckstück 99 bilden zusammen einen Notbremsstößel, der mittels des Bremspedals 30 gegen den Verstärkerkolben 99 drückbar ist, so daß über diesen und den stößelartigen Ansatz 88 der Hauptbremszylinderkolben 21 zum Zwecke der Erzeugung von Notbremsdruck verschiebbar ist. Der Hauptbremszylinderkolben 21 und der indirekt von diesem verschiebbare Hauptbremszylinderkolben 20 sind bereits im Zusammenhang mit dem ersten Ausführungsbeispiel gemäß der Figur 1 beschrieben.

Die Hilfsdruckquelle 81 weist wiederum eine Pumpe 31, ein Sicherheitsventil 33 und einen Druckspeicher 35 auf. Abweichend vom Ausführungsbeispiel gemäß der Figur 1 wird die Pumpe 31 von einem nicht dargestellten Fahrzeugantriebsmotor über beispielsweise einen Riemen angetrieben. Des weiteren kann abweichend vom Ausführungsbeispiel gemäß der Figur 1 das von der Pumpe aus dem Niederdruckvorratsbehälter 93 entnommene und dem Druckspeicher 35 zugeführte Druckmittel ein anderes Druckmittel sein als dasjenige, das zur Versorgung des Hauptbremszylinders in dem Druckmittelvorratsbehälter 22a auf Vorrat gehalten wird. Das von der Pumpe 31 geförderte Druckmittel kann beispielsweise ein Hydrauliköl sein, daß in einer Servolenkung der Antriebsmaschine verwendet wird.

Die Einrichtung 86 zum Verhindern von Blokkiergefahr umfaßt magnetisch steuerbare Ventile 100 bis 103, die zwischen die Radbremsen 3, 4, 5, 6 und die zugeordneten Hauptbremszylinderanschlüsse 18 und 19 eingesetzt sind, und zwei Steuerventile 104 und 105 zum Steuern der Beaufschlagung des Hilfskolbens 85 unter Verwendung der Hilfsdruckquelle 81. Die Ventile 100 bis 103 sind in einfacher Weise als 2/2-Ventile ausgebildet und mittels eines nicht dargestellten Steuergerätes steuerbar, das wiederum an die Raddrehungssensoren 12 bis 15 angeschlossen ist. Das Steuerventil 104 ist vorzugsweise als ein 3/3-Ventil ausgebildet und ebenfalls von dem Steuergerät steuerbar. In seiner Grundstellung verbindet das Steuerventil 104 einen zwischen dem Hilfskolben 85 und dem Hauptbremszylinder 80 in dem Hilfszylinder 84 umgrenzten Gegenbeaufschlagungsraum 106 über nicht bezeichnete Leitungen oder dergleichen mit dem Niederdruckvorratsbehälter 93. In einer ersten Schaltstellung sperrt das Ventil 104 alle seine Anschlüsse gegeneinander ab. In einer zweiten Schaltstellung verbindet das Steuerventil 104 den Druckspeicher 35 über nicht bezeichnete Leitungen oder dergleichen und ein aus Sicherheitsgründen in diese Leitungen eingebautes Rückschlagventil 107 mit der Gegenbeaufschlagungskammer 106. Zur Begrenzung einer Verschiebegeschwindigkeit des Hilfskolbens 85 im Falle seiner Beaufschlagung mit Druckmittel aus der Hilfsdruckquelle 81 ist der zweiten Steuerstellung des Steuerventils 104 eine Drossel 108 zugeordnet. Das Steuerventil 105 ist ebenfalls elektromagnetisch vom Steuergerät aus steuerbar. In seiner Grundstellung ist das Steuerventil 105 offen und verbindet den Gegenbeaufschlagungsraum 106 auf einem zweiten Leitungsweg mit dem Niederdruckvorratsbehälter 93. In der Schaltstellung unterbricht das Steuerventil 105 die genannte Verbindung. Das Steuerventil 105 hat einen drosselnd wirkenden Durchlaßquerschnitt.

Die Einrichtung 87 zum Begrenzen von Antriebsschlupf umfaßt zwei Schwimmkolbenanordnungen 109, 110 und zwei elektromagnetisch steuerbare Ventile 111 und 112 unter Mitverwendung der Ventile 102 und 103 der Einrichtung 86, die zum Verhindern von Blockiergefahr bestimmt ist. Die Ventile 112 und 111 sind an den Druckspeicher 35 angeschlossen und vorteilhafterweise als 3/3-Ventile ausgebildet. Des weiteren sind die Ventile 111 und 112 über nicht bezeichnete Rücklaufleitungen oder dergleichen mit dem Niederdruckvorratsbehälter 93 verbunden und so ausgebildet, daß sie in ihren Grundstellungen die Schwimmkolbenanordnungen 109 und 110 zu dem Niederdruckvorratsbehälter 93 hin druckentlasten. Jede der Schwimmkolbenanordnungen 109, 110 hat einen Zylinder 113 mit einem zum jeweiligen Ventil 111, 112 ausgerichteten Anschluß 114 und einem weiteren Anschluß 115, der über nicht bezeichnete Leitungen mit der jeweiligen Radbremse 5 bzw. 6 verbunden ist. In jedem Zylinder 113 ist ein Schwimmkolben 116 abdichtend verschiebbar angeordnet. Der Schwimmkolben unterteilt den Zylinder 113 jeweils in einen Primärraum 117 und einen Sekundärraum 118. Der Primärraum 117 liegt beim Anschlußraum 114, und der Sekundärraum 118 liegt jeweils beim Anschluß 115. In den Sekundärraum 118 ist jeweils eine Rückstellfeder 119 eingebaut, die den zugeordneten Schwimmkolben 116 in Richtung des Anschlusses 114 belastet, so daß, sofern keine nennenswerten Druckunterschiede zwischen den Anschlüssen 114 und 115 herrschen, der Rauminhalt der jeweiligen Sekundärkammer 118 am größten und der Rauminhalt der Primärkammer 117 am kleinsten ist.

Das zweite Ausführungsbeispiel der erfindungsgemäßen Fahrzeugbremsanlage 2a gemäß der Figur 3 arbeitet in der nachfolgend beschriebenen Weise.

Zuerst wird wieder der Fall angenommen, daß die Hilfsdruckquelle 81 keinen Hilfsdruck liefert. Ist das Fahrzeug abzubremsen, so wird mittels des Bremspedals über die Pedalstange 98, den Fühlkolben 97 und das Druckstück 99 der Verstärkerkolben mitsamt dem Hilfskolben 85 und dem Ansatz 88 in Richtung des Zylinderraumes 16 verschoben. Dabei wird zunächst der Hauptbremszylinderkolben 21 am Schnüffelloch 26 vorbeigeschoben, so daß in dem Zylinderraum 17 ein Druck entsteht, der sowohl durch den Hauptbremszylinderanschluß 19 und die in ihrer Offenstellung befindlichen Ventile 100 und 101 in den Radbremsen 3 und 4 wirksam wird als auch den Hauptbremszylinderkolben 20 an seiner Schnüffelbohrung 25 vorbeischiebt und dadurch im Zylinderraum 16 Druck erzeugt, der durch den Hauptbremszylinderanschluß 18 und die in ihren Durchlaßstellungen sich befindenden Ventile 102 und 103 in den Radbremsen 5 und 6 als Bremsdruck wirksam wird. Beim Loslassen des Bremspedals 30 kehren die genannten Kolben 90, 85, 21 und 20 in ihre Ausgangsstellungen zurück, und demgemäß findet keine Bremsung mehr statt.

Wird bei ordnungsgemäß arbeitender Hilfsdruckquelle 81 das Bremspedal 30 bewegt, so verschiebt die Pedalstange 98 über den Fühlkolben den Bremsventilschieber 91 relativ zu den Kolben 85 und 90. Dadurch wird, wie bereits erwähnt, der Verstärkerraum 92 von dem Niederdruckvorratsbehälter 93 getrennt und mit der Hilfsdruckquelle 81 verbunden. Infolgedessen strömt Druckmittel in den Verstärkerraum 92 ein und verschiebt den Verstärkerkolben 90 in Richtung des Zylinderraums 16 des Hauptbremszylinders 80, wodurch wie bei reiner Betätigung mittels des Druckstücks 99 Bremsdrücke erzeugbar sind. Der dabei in dem Verstärkerraum 92 herrschende Verstärkungsdruck wirkt in entgegengesetzter Richtung auf den Fühlkolben 97 und ist über die Pedalstange 98 schließlich am Bremspedal fühlbar. Der Verstärkungsdruck ist deshalb proportional derjenigen Kraft, mittels der ein Fahrer auf das Bremspedal 30 einwirkt.

Wird das Bremspedal 30 zu kräftig betätigt, so daß beispielsweise die Radbremse 4 Blockiergefahr auslöst, so wird das Steuergerät wiederum dafür sorgen, daß diese Blockiergefahr verschwindet. Zu diesem Zweck steuert das Steuergerät das Ventil 105 in seine Schließstellung und das Steuerventil 104 in seine zweite Steuerstellung, so daß mittels Druck aus der Hilfsdruckquelle 81 in der Gegenbeaufschlagungskammer 106 ein Druck entsteht, der über den Hilfskolben 85 die mittels des Verstärkerkolbens 90 erzeugte Verstärkungskraft überwindet und den Verstärkerkolben 90 in Richtung seiner Ausgangsstellung bewegt. Dadurch sinken in den Zylinderräumen 16 und 17 die Drücke ab, wodurch auch in der Radbremse 5 der Bremsdruck absinkt. Um nicht unnötigerweise auch in den Radbremsen 3, 4 und 6 die Bremsdrücke absinken zu lassen, was nämlich unnötige Bremswegverlängerungen nach sich zöge, werden zum Zeitpunkt der Gegenbeaufschlagung des Hilfskolbens 85 die Ventile 100, 101 und 103 geschlossen. Deshalb werden Bremsdruckabsenkungen in den Zylinderräumen 16 und 17 lediglich in der Radbremse 5 wirksam. Durch Zurücksteuern des Steuerventils 104 in seine erste Schaltstellung kann eine unnötige Bremsdruckabsenkung in den Zylinderräumen 16 vermieden werden. Ist die Blockiergefahr beseitigt, so steuert das Steuergerät die beiden Steuerventile 104 und 105 in deren Grundstellungen zurück und öffnet auch die Ventile 100, 101 und 103. Dies hat zur Folge, daß durch die nunmehr wieder hergestellte Verbindung der Gegenbeaufschlagungskammer 106 mit dem Niederdruckvorratsbehälter 93 der Hilfskolben 85 dem Verstärkungsdruck ausweicht und die Hauptbremszylinderkolben 21 und 20 den ursprünglichen Bremsdruck wieder herstellen.

Werden von einer nicht dargestellten Antriebsmaschine auf beide antreibbare Räder Antriebsmomente übertragen, die zu unerwünscht hohem Antriebsschlupf führen würden, dann werden die Ventile 102 und 103 vom Steuergerät geschlossen und die Ventile 111 und 112 in ihre zweiten Stellungen gesteuert, in denen sie Druckmittel aus dem Druckspeicher 35 in die Primärräume 117 der Schwimmkolbenanordnungen 109 und 110 einleiten. Diese Drücke verschieben die Schwimmkolben 116, so daß sich die Volumina der Sekundärräume 118 verkleinern und dort Drücke entstehen, die infolge des Schließens der Ventile 102 und 103 in den Radbremsen 5 und 6 wirksam werden. Der Einfachheit halber wurde hier das gleichzeitige Auftreten von gleich großem Schlupf an beiden Antriebsrädern zur Erläuterung der Wirkungsweise benützt. Dies kann nämlich beispielsweise durchaus dadurch zustande kommen, daß auf gerader Fahrbahn eine Antriebsmaschine ein zu großes Antriebsdrehmoment abgibt, das über ein gesperrtes Differentialgetriebe auf die Antriebsräder übertragen wird. Ist keine solche Differentialsperre vorhanden, dann kann natürlich analog zum Ausführungsbeispiel gemäß der Figur 1 je nach der vorliegenden Bedingung auch lediglich nur ein Rad gebremst werden. Natürlich ist auch diese beschriebene Einrichtung 87 zum Begrenzen von Antriebsschlupf weiterbildbar zur Schlupfbegrenzung von zusätzlich antreibbaren Rädern.

Das dritte Ausführungsbeispiel einer Fahrzeugbremsanlage 2b gemäß der Figur 4 unterscheidet sich von der Fahrzeugbremsanlage 2a gemäß der Figur 3 lediglich durch eine anders ausgebildete Einrichtung 87a zur Begrenzung von Antriebsschlupf. Diese Einrichtung 87a weist lediglich ein Ventil 111 und eine Schwimmkolbenanordnung 109 auf. Die Schwimmkolbenanordnung 109 dient zum gleichzeitigen Erzeugen von Bremsdrücken in den Radbremsen 5 und 6 und auch zum Erzeugen von Bremsdruck in einer der beiden Radbremsen 5 oder 6. Zu diesem Zweck ist die Schwimmkolbenanordnung 109 über Ventile 53a bzw. 54a mit den Radbremsen 5 bzw. 6 verbindbar. Die Ventile 53a und 54a unterscheiden sich von den Ventilen 53 und 54 des ersten Ausführungsbeispiels lediglich dadurch, daß ihnen keine Einwegventile 55 zugeordnet sind. Dies ist deshalb nicht nötig, weil die Schwimmkolbenanordnung 109 dann, wenn sich der Schwimmkolben 116 in seiner Endstellung bei dem Anschluß 114 befindet, kein Druckmittel aus den Radbremsen 5 und 6 in den Niederdruckvorratsbehälter 93 entweichen läßt. Der Vorteil, daß eine Schwimmkolbenanordnung 109 ein aus Sicherheitsgründen sonst üblicherweise vorgesehenes Rückschlagventil ersetzt, ist natürlich auch im Ausführungsbeispiel gemäß der Figur 3 enthalten. Es ist ohne weiteres erkennbar, daß die Ventile 53a und 54a in Verbindung mit dem vom Ventil 111 gesteuerten Schwimmkolben 116 nach dem gleichen Steuerungsgrundprinzip steuerbar sind wie die Ventile 100 bis 103 in Verbindung mit einer Gegenbeaufschlagung des Hilfskolbens 85. Daraus ergibt sich ohne weiteres, daß lediglich ein Ventil 111 und eine Schwimmkolbenanordnung 109 ausreicht, um bedarfsweise Bremsdrücke in den Radbremsen 5 und 6 unabhängig voneinander nacheinander den Erfordernissen anzupassen. Dies wird durchgeführt analog zur Arbeitsweise des ersten Ausführungsbeispiels gemäß der Figur 1.

## Ansprüche

1. Hydraulische Fahrzeugbremsanlage mit Radbremsen, mit einem Hauptbremszylinder, mit einem Bremskraftverstärker und einer Hilfsdruckquelle zum Betätigen des Bremskraftverstärkers und mit einer Einrichtung zum Verhindern von Radblockiergefahr und mit einer Einrichtung zum Begrenzen von Antriebsschlupf an antreibbaren Rädern, wobei für diese Einrichtungen sperrbare Ventilanordnungen zwischen dem Hauptbremszylinder und den Radbremsen angeordnet sind und weitere Ventile vorgesehen sind zum Steuern von Blockierschutzvorgängen und zum Begrenzen von Antriebsschlupf mittels Druck aus der Hilfsdruckquelle, dadurch gekennzeichnet, daß zwischen den Radbremsen (5, 6) der antreibbaren Räder und den am nächsten liegenden sperrbaren Ventilen (45, 46; 102, 103) die weiteren Ventile (53, 54; 111, 112; 53a, 54a, 111) angeschlossen sind, mittels denen zum Begrenzen von Antriebsschlupf Bremsdrücke in diese Radbremsen (5, 6) einleitbar sind unter Zuhilfenahme von Druck aus der Hilfsdruckquelle (8, 81).

2. Fahrzeugbremsanlage nach Anspruch 1, dadurch gekennzeichnet, daß die Ventile (53, 54) zum Einleiten von Bremsdrücken als 2/2-Ventile ausgebildet und mit die Radbremsen (5, 6) in Richtung zur Hilfsdruckquelle (8) absichernden Einwegventilen (55) zu Baugruppen zusammengefaßt sind.

3. Fahrzeugbremsanlage nach Anspruch 1, dadurch gekennzeichnet, daß die Ventile (111, 112) zum Einleiten von Bremsdrücken über mit Fe dern (119) belastete Schwimmkolbenanordnungen (109, 110, 116) mit den Radbremsen (5, 6) verbunden und so ausgebildet sind, daß sie in ihren Grundstellungen die Schwimmkolbenanordnungen (109, 110) druckentlastend mit einem Niederdruckvorratsbehälter (93) verbinden.

4. Fahrzeugbremsanlage nach Anspruch 1, dadurch gekennzeichnet, daß die Ventile (53a, 54a) zum Einleiten von Bremsdrücken in die Radbremsen (5, 6) von antreibbaren Rädern als 2/2-Ventile ausgebildet und gemeinsam an eine Schwimmkolbenanordnung (109) angeschlossen sind, die ihrerseits über ein Ventil (111) druckentlastbar und zum Bremsen mit der Hilfsdruckquelle (81) verbindbar ist.

FIG. 1

FIG. 2

FIG. 3

FIG. 4

EP 0 321 700 A2